# EUROPÄISCHE PATENTSCHRIFT

(11) **EP 3 690 260 B1**
(45) Veröffentlichungstag und Bekanntmachung des Hinweises auf die Patenterteilung: **26.05.2021**
(21) Anmeldenummer: 20153901.2
(22) Anmeldetag: 27.01.2020
(51) Int. Cl.: F16B 19/08

(54) **HALBHOHLSTANZNIET, EINE STANZNIETVERBINDUNG AUS MINDESTENS ZWEI BAUTEILEN MITHILFE DES HALBHOHLSTANZNIETS SOWIE EIN VERFAHREN ZUM VERBINDEN DER BAUTEILE MIT DEM HALBHOHLSTANZNIET**
SEMI-HOLLOW PUNCH RIVET, A PUNCH RIVET JOINT OF AT LEAST TWO COMPONENTS BY MEANS OF THE SEMI-HOLLOW PUNCH RIVET AS WELL AS A METHOD FOR CONNECTING THE COMPONENTS WITH THE SEMI-HOLLOW PUNCH RIVET
RIVET AUTO-POINÇONNEUR SEMI-TUBULAIRE, RACCORDEMENT RIVETÉ D'AU MOINS DEUX COMPOSANTS À L'AIDE DU RIVET AUTO-POINÇONNEUR SEMI-TUBULAIRE AINSI QUE PROCÉDÉ DE RACCORDEMENT DES COMPOSANTS AU RIVET AUTO-POINÇONNEUR SEMI-TUBULAIRE

(30) Priorität: 30.01.2019 DE 102019102383
(43) Veröffentlichungstag der Anmeldung: 05.08.2020
(73) Patentinhaber: Böllhoff Verbindungstechnik GmbH, 33649 Bielefeld (DE)
(72) Erfinder: HENKE, Dennis, 33442 Herzebrock-Clarholz (DE); MENNE, Franz Ferdinand, 33175 Bad Lippspringe (DE)
(74) Vertreter: Heyer, Volker

(56) Entgegenhaltungen:
- EP-B1- 0 833 063
- EP-B1- 1 229 254
- EP-B2- 2 024 651
- DE-A1- 19 927 103
- DE-A1-102013 020 504
- DE-A1-102014 201 976
- DE-B4-102005 020 416
- DE-B4-102009 050 342
- GB-A- 2 141 369

## Beschreibung

### 1. Gebiet der Erfindung

Die vorliegende Erfindung betrifft einen Halbhohlstanzniet, mit dem eine Verbindung zwischen mindestens zwei stapelförmig übereinander angeordneten Bauteilen herstellbar ist. Des Weiteren betrifft vorliegende Erfindung eine Stanznietverbindung aus mindestens zwei stapelförmig übereinander angeordneten Bauteilen sowie ein Verfahren zum Verbinden der mindestens zwei Bauteile mithilfe des Halbhohlstanzniets.

### 2. Hintergrund der Erfindung

Um den Kohlendioxidausstoß zu reduzieren, forcieren die Automobilhersteller die Entwicklung neuer Karosserien, mit denen Gewichtseinsparungen erzielt werden können. Aus diesem Grund nimmt der Anteil von höchstfesten Werkstoffen, wie zum Beispiel 22MnB5 (Usibor) in sicherheitsrelevanten Bereichen von Kraftfahrzeugen zu. Zudem wird zunehmend der Leichtbau zur Konstruktion von Fahrzeugen eingesetzt.

Einen Halbhohlstanzniet für den obigen Anwendungsbereich beschreibt beispielsweise DE 10 2009 050 342 B4. Dieser Stanzniet verfügt über eine stärkere Schaftwanddicke als auch über einen größeren Schaftdurchmesser im Vergleich zu bisher üblichen Stanznietgeometrien. Mit diesem Halbhohlstanzniet lassen sich Usibor-Lagen bis maximal 1,7 mm Blechstärke fügen. Durch den vergrößerten Schaftdurchmesser erhöht sich jedoch die erforderliche Stanzkraft bzw. Setzkraft zum Einbringen des Halbhohlstanzniets in den Bauteilstapel. Zudem eignen sich die Standard-Füge-Systeme nicht für die Verarbeitung derartiger Stanzniete, da sie für die Vereinzelung und Beförderung von Stanznietelementen mit ca. 5,5 mm Schaftdurchmesser ausgelegt sind. Daher werden alternative Fügeelemente gesucht, da der oben beschriebene Halbhohlstanzniet eine Sonderlösung darstellt.

Eine ähnlich robuste Lösungen wie die oben beschriebene Stanznietgeometrie offenbaren DE 10 2013 020 504 A1 sowie EP 2 024 651 B2.

EP 0 833 063 B1 beschreibt einen Halbhohlstanzniet aus Leichtmetall, wie beispielsweise Aluminium oder einer Aluminiumlegierung. Dieser Halbhohlstanzniet wird zum Verbinden von Leichtmetallblechen oder dergleichen eingesetzt. Da er nicht aus Stahl besteht, wird neben der Verwendung von Leichtmetallblechen auch ein gewichtsoptimiertes Verbindungselement eingesetzt. Problematisch ist jedoch die Nutzung des Halbhohlstanzniets aus Leichtmetall für Stahlverbindungen oder höherfeste Stähle. Denn für die in diesem Zusammenhang erforderlichen hohen Fügekräfte weist der Halbhohlstanzniet nicht die passende Stabilität auf.

Der Halbhohlstanzniet des oben genannten europäischen Patents weist am kopfabgewandten Schaftende einen konisch ausgebildeten Schafthohlraum auf. Dieser Schafthohlraum ist rotationssymmetrisch um die Längsachse des Nietschafts angeordnet. Während der stumpfe Nietfuß für die Abtrennung des Stanzbutzens aus dem zu durchstanzenden Bauteil sorgt, führt die konische Form des Schafthohlraums zu einem Verkanten des aufzunehmenden Stanzbutzens. Dies liegt an dem spitzen Zulauf des Schafthohlraums, der durch ein begrenztes Fließen des Butzenmaterials nicht vollständig nutzbar ist. Dieser Nachteil wirkt sich stärker beim Verbinden von Stahlbauteilen aus, wie es beispielsweise in EP 1 229 254 B1 beschrieben ist.

Eine andere Ausgestaltungsmöglichkeit eines Halbhohlstanzniets mit stumpfem Nietfuß beschreibt DE 10 2005 020 416 B4. Der beschriebene Halbhohlstanzniet weist betrachtet im Längsquerschnitt des Nietschafts einen Schafthohlraum auf, der eine glockenartige Ausgestaltung zeigt. Beginnend an der radialen Innenseite des Nietfußes verläuft ein konvex geformter Kreisbogen annähernd bis zum Grund des Schafthohlraums. Am Grund des Schafthohlraums werden die seitlich angeordneten konvexen Kreisbögen über eine Kombination von zwei weiteren Kreisbögen miteinander verbunden. Im Gegensatz zu der oben beschriebenen Ausgestaltung eines konusförmigen Schafthohlraums führt die Nutzung konvex geformter Kreisbögen zu einer noch stärkeren Verjüngung des Schafthohlraums in Richtung Schaftgrund. Resultat ist auch hier, dass der Butzen nach einem erfolgreichen Abtrennen vom ersten Bauteil früher im Schafthohlraum verglichen zum konisch ausgebildeten Schafthohlraum stecken bleibt und die Ausbildung einer Verbindung behindert. Zudem hat die Nutzung der kreisbogenförmig konvexen Wandgestaltung des Halbhohlstanzniets zur Folge, dass der Schaft im Fußbereich aufgrund der geringen Wandstärke auch eine geringe Stabilität aufweist. Somit besteht die Gefahr, dass die in axialer Richtung vom Nietkopf übertragenen Stanzkräfte nicht effektiv bis zum stumpfen Nietfuß übertragen werden und der Nietschaft versagt.

Mit Blick auf den Stand der Technik ist es daher die Aufgabe vorliegender Erfindung, eine verbesserte Geometrie für einen Halbhohlstanzniet bereitzustellen, die neben einer verlässlichen Übertragung hoher Stanzkräfte ebenfalls eine bessere Aufnahme des Stanzbutzens gewährleistet.

### 3. Zusammenfassung der Erfindung

Vorliegende Erfindung offenbart einen Halbhohlstanzniet, mit dem eine Verbindung zwischen mindestens zwei stapelförmig übereinander angeordneten Bauteilen herstellbar ist. Der erfindungsgemäße Halbhohlstanzniet weist die folgenden Merkmale auf: einen Nietkopf mit einem sich davon erstreckenden Nietschaft, der eine zylindrische Mantelfläche aufweist, an einem dem Nietkopf abgewandten Ende des Nietschafts ist ein stumpfer Nietfuß mit einer Nietfußstirnfläche vorgesehen, die senkrecht zu einer Längsachse des Nietschafts angeordnet ist, und ein im axialen Querschnitt des Nietschafts glockenartig geformter Schafthohlraum erstreckt sich beginnend am kopfabgewandten Ende des Nietschafts in den Nietschaft hinein, wobei der glockenartig geformte Schafthohlraum gebildet wird aus einem konvexen Einlaufbereich, der an einer radialen Innenseite der Nietfußstirnfläche beginnt und kreisbogenförmig mit einem Einlaufradius Rs in Richtung Nietkopf verläuft, einem geradlinig verlaufenden Fortsetzungsbereich, in den der Einlaufbereich tangential übergeht und der in einem spitzen Winkel in Bezug auf die zylindrische Mantelfläche angeordnet ist, und einem abschließenden Gewölbebereich.

Die erfindungsgemäße Konstruktion des Halbhohlstanzniets realisiert eine verbesserte Übertragung der über den Nietkopf aufgebrachten Stanzkraft auf die Fügestelle. Dabei stellt bevorzugt die Stanznietgeometrie sicher, dass der Verlust an Verformungsenergie innerhalb des Halbhohlstanzniets vor und/oder während des Eindringens des Halbhohlstanzniets in zumindest das erste Bauteil einer Stanznietverbindung durch ein Verformen des Stanzniets reduziert oder ganz vermieden wird. Damit steht die über den Nietkopf zugeführte mechanische Energie bevorzugt vollständig dem Eindringen des Nietschafts in die mindestens zwei stapelförmig übereinander angeordneten Bauteile und das damit verbundene Ausstanzen eines Stanzbutzens zur Verfügung.

Während einerseits die Geometrie des Nietschafts für eine effektivere Übertragung der Stanzenergie zur Fügestelle sorgt, gewährleistet der rotationssymmetrisch zur Längsachse des Nietschafts angeordnete Schafthohlraum eine verbesserte Aufnahme des Stanzbutzens. Dies wird durch die Kombination des bogenförmig konvex ausgebildeten Einlaufbereichs mit einem des Weiteren linear verlaufenden Fortsetzungsbereich in Richtung des Nietkopfes im Schafthohlraum realisiert. Während einerseits bevorzugt der bogenförmig ausgebildete Einlaufbereich das Auftreten von mechanischen Spannungsspitzen beim Erzeugen des Stanzbutzens reduziert, stellt der lineare Fortsetzungsbereich bevorzugt eine reduzierte Verjüngung des Schafthohlraums in Richtung seiner Tiefe zur Verfügung. Damit wird ein zur Aufnahme des Stanzbutzens zur Verfügung stehendes Volumen im Schafthohlraum derart ausgenutzt, dass es ohne Stabilitätsverlust des Nietschafts ein großes Aufnahmevolumen für den Stanzbutzen zur Verfügung stellt.

Der am Grund des Schafthohlraums vorgesehene abschließende Gewölbebereich ist vorzugsweise geschlossen oder aber auch durch eine Durchgangsöffnung in Richtung Nietkopf offen ausgebildet. Die erfindungsgemäß bevorzugte Öffnung im Gewölbebereich stellt durch eine bevorzugte Durchgangsöffnung zum Nietkopf oder eine Sackbohrung ein weiteres Aufnahmevolumen für Material des Stanzbutzens zur Verfügung.

Gemäß einer bevorzugten Ausführungsform vorliegender Erfindung umfasst der Schaftdurchmesser D_{A} des Halbhohlstanzniets eine Größe von Dₐ ≤ 5,6 mm, vorzugsweise Dₐ = 5,5 mm

Bevorzugt wird der Halbhohlstanzniet mit dem oben beschriebenen Schaftdurchmesser realisiert. Dieser Schaftdurchmesser ist an gängige Zufuhrsysteme sowie Stanznietsysteme angepasst und lässt sich mit diesen ohne weitreichende konstruktive Umgestaltungen der Systemtechnik kombinieren.

Es ist ebenfalls bevorzugt, einen anderen Schaftdurchmesser als den oben definierten zu nutzen. Denn die erfindungsgemäße oben zusammengefasste Geometrie des Halbhohlstanzniets ist unabhängig von dem oben definierten Schaftdurchmesser gleichermaßen sowohl mit größeren wie auch kleineren Schaftdurchmessern realisierbar.

Gemäß einer weiteren bevorzugten Ausgestaltung der erfindungsgemäßen Geometrie des Halbhohlstanzniets weist dessen Nietfußstirnfläche eine radial verlaufende Fußbreite Bₛ im Bereich von 1/30·Dₐ ≤B_{S}≤1/3·D, vorzugsweise 1/15 Dₐ≤B_{S}≤1/6Dₐ.

Erfindungsgemäß bevorzugt weist der Halbhohlstanzniet eine stumpfe Fußgeometrie auf. Dies bedeutet, dass sich die Nietfußstirnfläche senkrecht in Bezug auf die Längsachse des Nietschafts erstreckt. Ebenfalls bevorzugt hat die Nietfußstirnfläche die oben angegebene radiale Breite, um die über den Nietkopf aufgebrachte Stanzkraft optimal auf das erste Bauteil an der Fügestelle übertragen zu können. In diesem Zusammenhang ist die bevorzugte Größe der Nietfußstirnfläche gerade für die Übertragung hoher Nietkräfte beim Fügen hochfester oder höherfester Stähle vorteilhaft.

Des Weiteren ist es bevorzugt, den Halbhohlstanzniet mit der bevorzugten Nietfußgeometrie zum Herstellen einer Fügeverbindung in einem Stapel aus mindestens drei übereinander angeordneten Bauteilen gleicher und/oder unterschiedlicher Materialien einzusetzen. Eine derartige Fügeverbindung muss zunächst gewährleisten, dass die Stabilität des Halbhohlstanzniets die Einleitung ausreichend hoher mechanischer Energie in die Fügestelle gewährleistet. Dies realisiert die Fußgeometrie des Halbhohlstanzniets in Kombination mit der Schaftgeometrie. Denn auch die Formgebung des Schafthohlraums gewährleistet bevorzugt eine ausreichende Wandstärke des Nietschafts im Bereich des Schafthohlraums, welche nicht überlastet wird durch die vom Nietkopf auf den Stanzfuß übertragene Stanzkraft. In Kombination damit stellt der Schafthohlraum ein ausreichend großes Aufnahmevolumen für den Stanzbutzen zur Verfügung, der sich vorzugsweise bei einer Verbindung aus mindestens drei Bauteilen aus Material des ersten und zweiten Bauteils betrachtet in Fügerichtung zusammensetzt.

Gemäß einer weiteren bevorzugten Ausgestaltung des Halbhohlstanzniets weist der Einlaufradius R_{S} in Bezug auf die Fußbreite Bs folgende Größe auf: R_{S} ≤ 20 B_{S}, vorzugsweise 0,3 mm ≤ R_{S} ≤ 6 mm und insbesondere 1 mm ≤ R_{S} ≤ 4 mm

Die bevorzugt enge Abstimmung zwischen der Fußbreite des stumpfen Nietfußes sowie der Größe des Einlaufradius ist auf eine optimale funktionelle Ausrichtung der Geometrie des Halbhohlstanzniets gerichtet. Denn in Abhängigkeit von den miteinander zu verbindenden Bauteilen erfordert die aufzubringende Stanzkraft eine entsprechende Größe der Fußbreite. Während der am radial inneren Rand der Fußbreite beginnende Einlaufbereich in den Schafthohlraum den Nietschaft des Halbhohlstanzniets nicht schwächen darf, ist er bevorzugt gleichzeitig so einstellbar, dass ein ausreichend großes Aufnahmevolumen im Schafthohlraum für den Stanzbutzen zur Verfügung steht. Daher ist es bevorzugt, die Fußbreite des Stanzfußes in enger Abstimmung mit der Größe des Einlaufradius zu wählen.

Gemäß einer weiteren bevorzugten Ausgestaltung der Geometrie des Halbhohlstanzniets ist der Fortsetzungsbereich in einem spitzen Winkel in Bezug auf die zylindrische Mantelfläche des Nietschafts angeordnet. Dieser spitze Winkel α liegt vorzugsweise im Bereich von 5° ≤ α ≤ 30°, insbesondere 5° ≤ α ≤ 20° in Bezug auf die zylindrische Mantelfläche.

Erfindungsgemäß bevorzugt geht der Einlaufbereich, der kreisbogenförmig auf Grundlage des Einlaufradius Rs ausgebildet ist, direkt tangential in den linearen Fortsetzungsbereich über. Der Fortsetzungsbereich wiederum ist bevorzugt wie die Mantelfläche eines Kegelstumpfes ausgebildet. Daher weist diese Mantelfläche bzw. die Fläche des Fortsetzungsbereichs innerhalb des Schafthohlraums eine definierte Winkelorientierung in Bezug auf die zylindrische Mantelfläche des Nietschafts auf. Der erfindungsgemäß bevorzugte Bereich des spitzen Winkels α in der Größe von 5° ≤ α ≤ 20° stellt einen Kompromiss zwischen einem größtmöglichen Aufnahmevolumen des Schafthohlraums und einer optimalen Verbindung zum bogenförmigen Einlaufbereich dar.

Gemäß einer weiteren bevorzugten Ausgestaltung des Halbhohlstanzniets vorliegender Erfindung gerade in Kombination mit dem oben beschriebenen bevorzugten Schaftdurchmesser ist eine Tiefe t_{B} des glockenartig geformten Schafthohlraums in Bezug auf den Schaftdurchmesser Dₐ im Bereich von 1/3 Dₐ ≤t_{B}≤2/3 Dₐ vorgesehen.

Um das Aufnahmevolumen des Schafthohlraums an den aufzunehmenden Stanzbutzen und somit an die geplante Fügeverbindung anpassen zu können, ist die Tiefe des glockenartig geformten Schafthohlraums anpassbar. Diese wird bevorzugt in Abhängigkeit von dem gewählten Schaftdurchmesser eingestellt. Zudem wurde in bevorzugten Ausgestaltungen des Halbhohlstanzniets erkannt, dass trotz des oben gewählten Tiefenbereichs des Schafthohlraums in Abhängigkeit vom Schaftdurchmesser eine ausreichende Stabilität des Halbhohlstanzniets beim Herstellen von Fügeverbindungen gewährleistet ist.

Gemäß einer weiteren bevorzugten Ausgestaltung des Halbhohlstanzniets weist der glockenartig geformte Schafthohlraum eine in Längsrichtung des Nietschafts verlaufende zentrale Durchgangsöffnung zum Nietkopf oder eine Sackbohrung auf, um einen Hohlniet zu bilden. Mithilfe dieser bevorzugten konstruktiven Maßnahme ist eine Vergrößerung des Aufnahmevolumens des Schafthohlraums realisierbar, wie oben bereits beschrieben worden ist.

Vorliegende Erfindung umfasst zudem eine Stanznietverbindung aus mindestens zwei stapelförmig übereinander angeordneten Bauteilen, die über den oben beschriebenen Halbhohlstanzniet miteinander verbunden sind. Aufgrund der bevorzugten Variabilität in der Geometrie des Halbhohlstanzniets ist es möglich, unterschiedliche Bauteilmaterialien innerhalb einer Fügeverbindung zu verarbeiten. Entsprechend wird vorzugsweise der Halbhohlstanzniet für das Verbinden von hochfesten und höherfesten Stählen unterschiedlicher Bauteile eingesetzt. In gleicher Weise ist es bevorzugt, den oben beschriebenen Halbhohlstanzniet zum Verbinden von Bauteilen aus Leichtmetallen oder zum Verbinden von Bauteilen aus Leichtmetallen und Stählen zu nutzen.

Vorliegende Erfindung offenbart in diesem Zusammenhang ebenfalls ein Verfahren zum Verbinden von mindestens zwei Bauteilen mithilfe des oben beschriebenen Halbhohlstanzniets. Dieses Verbindungsverfahren weist die folgenden Schritte auf: Anordnen der mindestens zwei Bauteile übereinander in einer stapelförmigen Anordnung auf einer Matrize oder einem Amboss und Setzen eines Halbhohlstanzniets gemäß einer der oben beschriebenen bevorzugten Ausführungsformen in die mindestens zwei Bauteile.

### 4. Kurze Beschreibung der begleitenden Zeichnung

Die bevorzugten Ausführungsformen vorliegender Erfindung werden unter Bezugnahme auf die begleitende Zeichnung näher erläutert. Es zeigen:
- Figur 1: eine schematische Schnittdarstellung einer bevorzugten Ausführungsform des Halbhohlstanzniets mit charakteristischen Größen zur Definition der Geometrie des Halbhohlstanzniets,
- Figur 2: eine Ausschnittsvergrößerung aus Figur 1, in der die Auswirkung einer Variation der Größe des Einlaufradius auf den konvexen Einlaufbereich und somit die Veränderung der Form des Schafthohlraums dargestellt ist,
- Figur 3: eine Ausschnittsvergrößerung aus Figur 1, die den Schafthohlraum und dessen veränderte Form aufgrund der bevorzugten Variation des spitzen Winkels des geradlinig verlaufenden Fortsetzungsbereichs in Bezug auf die Formgebung des Schafthohlraums und dessen Volumen gezeigt,
- Figur 4: eine Ausschnittsvergrößerung aus Figur 1, welche eine bevorzugte Variation der Fußbreite des stumpfen Nietfußes des Halbhohlstanzniets veranschaulicht,

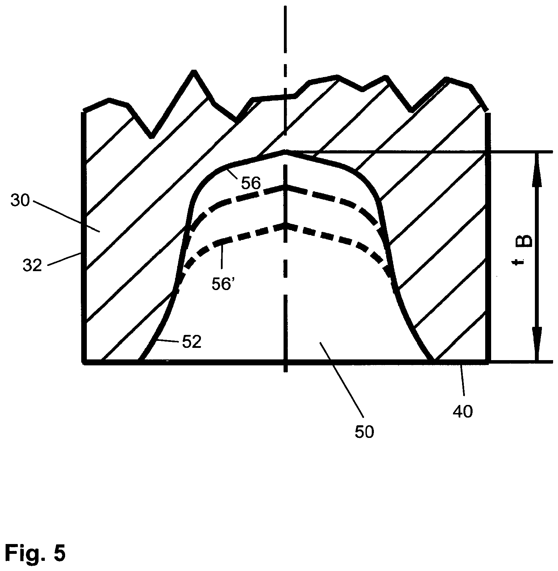

- Figur 5: eine Ausschnittsvergrößerung aus Figur 1, in der eine veränderte Tiefe des Schafthohlraums und die Auswirkung auf das Volumen des Schafthohlraums veranschaulicht sind,
- Figur 6: eine Darstellung bevorzugter Gestaltungen des Nietkopfs des Halbhohlstanzniets,
- Figur 7: eine schematische Schnittansicht eines bevorzugten erfindungsgemäßen Halbhohlstanzniets mit Durchgangsöffnung vom Schafthohlraum zum Nietkopf zur Bildung eines Hohlniets und
- Figur 8: eine schematische Schnittansicht einer bevorzugten Stanznietverbindung mit zwei Bauteilen,
- Figur 9: eine schematische Schnittansicht einer bevorzugten Stanznietverbindung mit drei Bauteilen,
- Figur 10: ein Flussdiagramm einer bevorzugten Ausführungsform des Verbindungsverfahrens mit Hilfe des Halbhohlstanzniets.

### 5. Detaillierte Beschreibung der bevorzugten Ausführungsformen

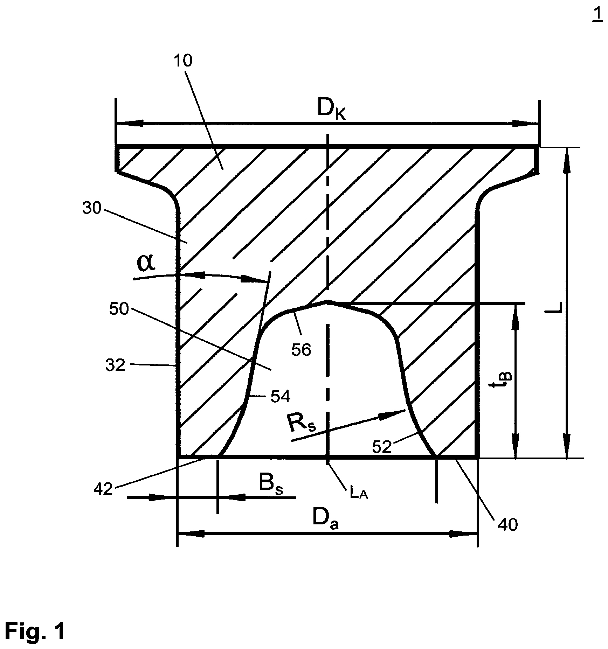

Eine bevorzugte Ausführungsform des erfindungsgemäßen Halbhohlstanzniets 1 ist in Figur 1 gezeigt. Figur 1 eine schematische Schnittansicht quer zur Längsachse L_{A} des Halbhohlstanzniets 1.

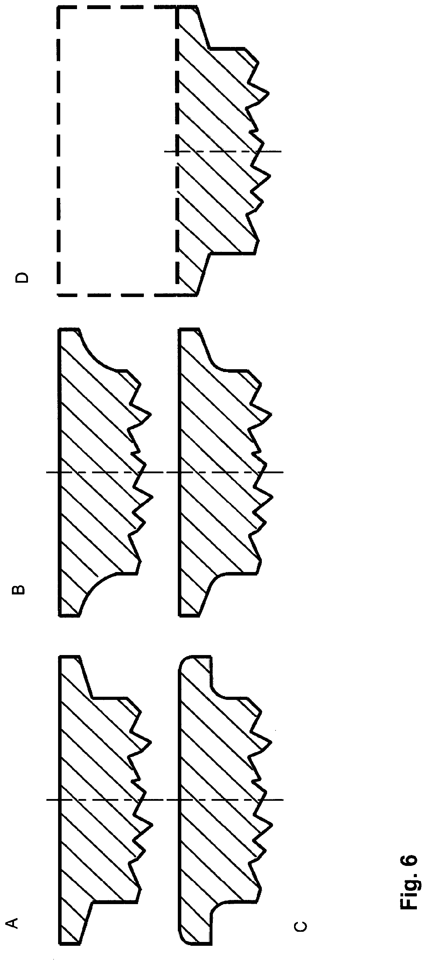

Der Halbhohlstanzniet 1 umfasst einen Nietkopf 10 mit einem sich davon erstreckenden Nietschaft 30. Der Nietkopf 10 weist je nach Anwendungsfall eine bevorzugte Kopfform auf, wie sie beispielgebend in Figur 6 schematisch gezeigt sind. Entsprechend wird vorzugsweise der Nietschaft 30 mit einem Senkkopf (Figur 6A), einem Senkkopf mit kreisbogenförmigem Übergang zum Nietschaft 30 (Figur 6B) oder einem Flach-Rund-Kopf (Figur 6C) kombiniert. Es ist ebenfalls bevorzugt, den Nietkopf 10 mit einem Funktionselement 12, wie vorzugsweise ein Gewindebolzen oder eine Mutter, zu kombinieren (Figur 6D).

Der Nietschaft 30 weist dem Nietkopf 10 gegenüberliegend einen stumpfen Nietfuß 40 auf. Der Nietfuß 40 umfasst eine Nietfußstirnfläche 42. Die Nietfußstirnfläche 42 ist vorzugsweise senkrecht zu einer zylindrischen Mantelfläche 32 des Nietschafts 30 angeordnet. Gleichermaßen erstreckt sich die Nietfußstirnfläche 42 senkrecht zur Längsachse L_{A} des Halbhohlstanzniets 1.

Beginnend am Nietfuß 40 erstreckt sich in Richtung Nietkopf 10 ein Schafthohlraum 50 im Inneren des Nietschafts 30. Der Schafthohlraum 50 ist rotationssymmetrisch um die Längsachse L_{A} des Halbhohlstanzniets 1 angeordnet.

Wie man anhand der Querschnittsdarstellung entlang der Längsachse L_{A} in Figur 1 erkennen kann, weist der Schafthohlraum 50 eine glockenartige Gestalt mit einer Öffnung angrenzend an den Nietfuß 40 auf.

Der Schafthohlraum 50 im Nietschaft 30 ist vorzugsweise derart geformt, dass sich neben einer ausreichenden Stabilität des Nietfußes 40 bei hohen Stanzkräften auch ein ausreichend großes Aufnahmevolumen für den Stanzbutzen im Schafthohlraum 50 ergibt. In diesem Zusammenhang ist vorzugsweise der Nietschaft 30 beginnend am Nietkopf 10 als Vollelement ausgebildet.

Der als Vollelement vorgesehene Nietschaft 30 erstreckt sich gemäß einer Ausführungsform zumindest bis zur Mitte des Halbhohlstanzniets 1 mit einer Gesamtlänge L. Dadurch wird bevorzugt eine großflächige Verteilung der Fügekraft bzw. der Stanzkraft im kopfnahen Bereich des Halbhohlstanzniets 1 gewährleistet. Diese Stanzkraft wird zunächst über die gesamte Querschnittsfläche des Nietschafts 30 in Richtung Nietfuß 40 übertragen. Der Anteil des Vollelements am Nietschaft 30 wird durch die Tiefe des Schafthohlraums 50 bestimmt, wie unten näher erläutert ist.

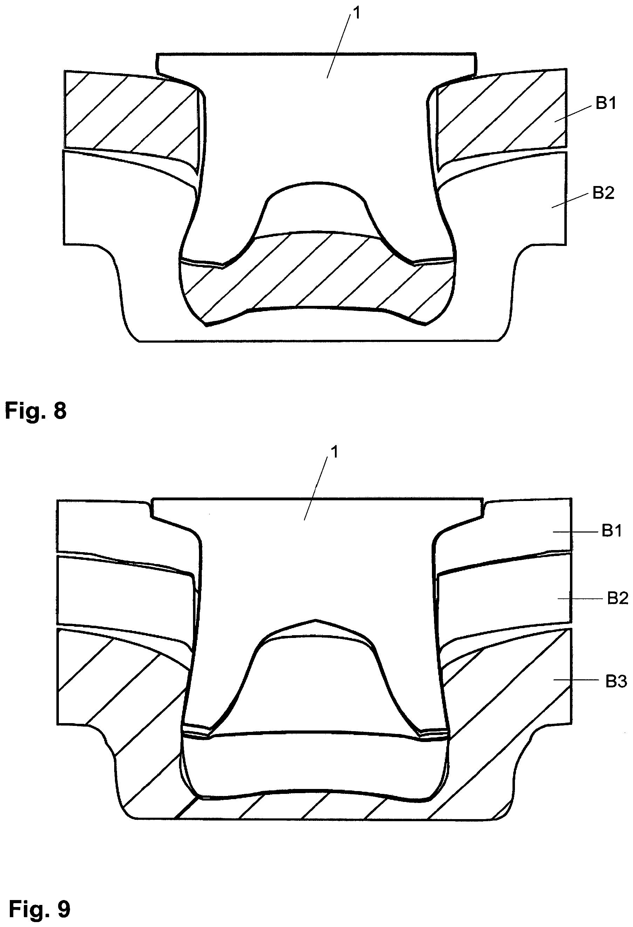

Aufgrund des Schafthohlraums 50 ist der Nietschaft 30 im Fußbereich hohl ausgebildet. Der Schafthohlraum 50 erstreckt sich in zentralsymmetrischer Anordnung um die Längsachse L_{A} in Richtung Nietkopf 10. Eine Tiefe t_{B} des Schafthohlraums 50 ist derart gewählt, dass der Halbhohlstanzniet 1 während des Setzprozesses nur in der unteren Hälfte des Nietschafts 30, also in der Hälfte des Nietschafts 30 angrenzend an den Nietfuß 40, umgeformt wird. Somit sorgt die unten näher erläuterte Geometrie des Schafthohlraums 50 auch für ein ausreichendes Aufspreizen des hohlen Schaftabschnitts zur Hinterschnittbildung in der hergestellten Stanznietverbindung. Dies ist beispielgebend in den schematischen Darstellungen der Stanznietverbindungen der Figuren 8 und 9 gezeigt.

In einer bevorzugten Ausführungsform des erfindungsgemäßen Halbhohlstanzniets 1 weist dieser einen Schaftdurchmesser Dₐ von Dₐ ≤ 5,6 mm auf. Vorzugsweise ist der Schaftdurchmesser Dₐ gleich 5,5 mm, sodass der Halbhohlstanzniet 1 mit gängigen Stanzniet- und Zufuhrsystemen verarbeitbar ist.

In diesem Zusammenhang wird vorzugsweise der Nietkopf 10 mit einem Kopfdurchmesser Dₖ gleich 7,75 mm hergestellt. Dieses Standardmaß gewährleistet die Nutzung von bekannten Füge- und Nietzufuhrsystemen.

Gemäß weiterer Ausführungsformen vorliegender Erfindung ist es ebenfalls bevorzugt, die beschriebene Geometrie des Halbhohlstanzniets 1 mit anderen Schaftdurchmessern Dₐ und/oder Kopfdurchmessern Dₖ zu kombinieren.

Weiterhin bevorzugt liegt die Nietlänge L des Halbhohlstanzniets 1 in einem Bereich von 4 mm≤L≤9 mm. Je nach Anwendungsfall wird die Nietlänge L an die herzustellende Fügeverbindung bzw. die Stapeldicke der miteinander zu verbindenden Bauteile angepasst.

Um unterschiedliche Fügeaufgaben realisieren zu können, ist der Halbhohlstanzniet 1 vorzugsweise aus unterschiedlichen Werkstoffen herstellbar. Bevorzugte Nietwerkstoffe sind Stahl, Aluminium oder Kupfer. Hier sind auch weitere Werkstoffe bevorzugt, um entsprechende Fügeaufgaben zu realisieren.

Wie anhand der Darstellung des bevorzugten Schafthohlraums 50 in Figur 1 zu erkennen ist, beginnt am radial inneren Rand des Nietfußes 40 ein konvexer Einlaufbereich 52. Der konvexe Einlaufbereich 52 verläuft kreisbogenförmig in Richtung des Nietkopfs 10.

Der kreisbogenförmige Einlaufbereich 52 hat gemäß einer Ausführungsform vorliegender Erfindung einen Radius Rs, der in Abhängigkeit von einer Fußbreite Bs des Nietfußes 40 definiert ist. Die radial verlaufende Fußbreite Bs der Nietfußstirnfläche 42 liegt vorzugsweise im Bereich von 1/30Dₐ ≤B_{S}≤1/3 Dₐ, wobei D_{A} den oben diskutierten Schaftdurchmesser beschreibt. Vorzugsweise liegt die Fußbreite BS im Bereich von 1/15 Dₐ ≤B_{S}≤1/6 Dₐ.

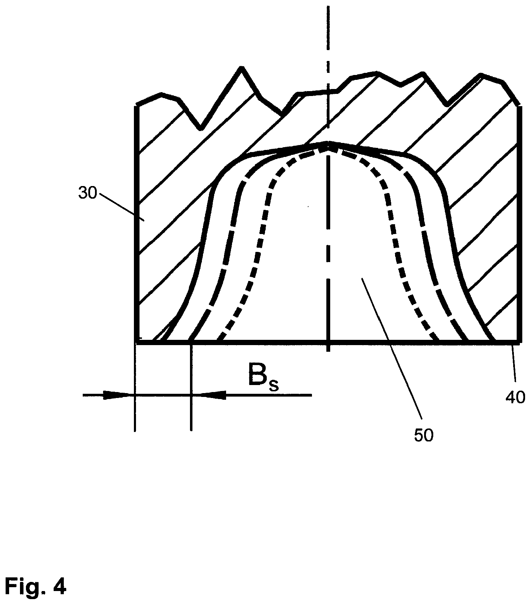

Eine schematische Darstellung der bevorzugten Variation der Fußbreite B_{S} zeigt Figur 4. Es wird deutlich, wie die zunehmende Fußbreite B_{S} eine Verstärkung des Nietfußes 40 zur Folge hat. Es ist ebenfalls erkennbar, dass eine Zunahme der Fußbreite B_{S} zu einer Verringerung des Aufnahmevolumens des Schafthohlraums 50 führt.

Die bevorzugte untere Grenze des angegebenen größeren Bereichs für die Nietfußbreite Bs gewährleistet, dass der Nietfuß 40 erst nach einem Durchdringen der Decklage oder eines ersten Bauteils in einem Bauteilstapel aufspreizt. Dadurch ist eine größere Hinterschnittbildung in der Stanznietverbindung gewährleistet, die die Verbindung der Bauteile unterstützt.

Mit zunehmender Fußbreite Bs nimmt die Steifigkeit des Nietfußes 40 zu. Entsprechend wird mit zunehmender Fußbreite B_{S} die Deformation des Nietfußes 40 bzw. ein Aufspreizen des Nietfußes 40 eingeschränkt bzw. erschwert. In diesem Zusammenhang wurde es als vorteilhaft erkannt, die Fußbreite Bs nicht über die oben angegebene obere Grenze hinaus auszudehnen, um eine noch ausreichende Fußdeformation und ein ausreichend großes Aufnahmevolumen für den Stanzbutzen im Schafthohlraum 50 bereitzustellen.

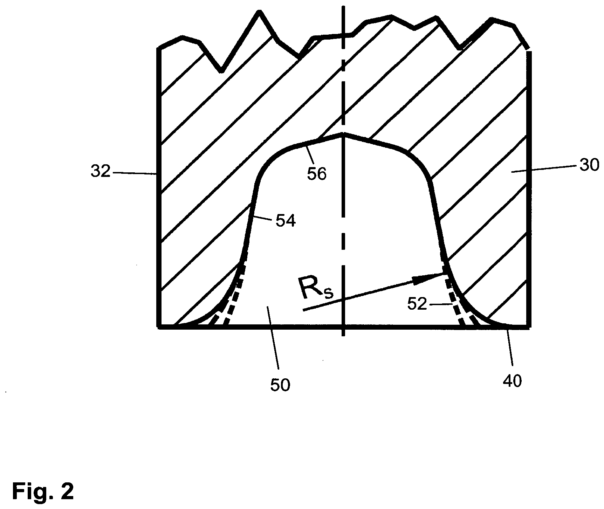

Darauf aufbauend ist der bevorzugte Einlaufradius R_{S} als ein Vielfaches der Fußbreite B_{S} definiert, insbesondere gemäß R_{S} ≤ 20 B_{S}. Weiterhin bevorzugt hat der Einlaufradius R_{S} eine Größe von 0,3 mm ≤ R_{S} ≤ 6 mm und insbesondere 1 mm ≤ R_{S} ≤ 4 mm. Eine bevorzugte Variation des Einlaufradius Rs zeigt schematisch Figur 2.

Der konvexe Einlaufbereich 52 in dem bevorzugten Radienbereich ermöglicht eine fließende Aufweitung des Nietfußes 40 während eines Fügevorgangs. Die fließende Aufweitung des Nietfußes 40 ist bevorzugt auch mit einem fließenden Aufsteigen eines Stanzbutzens in den Schafthohlraum 50 verbunden. Dies ist gerade dann von Vorteil, wenn duktiles Material, wie beispielsweise Aluminium, als Decklage mit einem pressharten Stahl als zweite Lage oder als Mittellage in einem Bauteilstapel und in einer darin vorgesehenen Stanznietverbindung kombiniert wird (siehe Figuren 8 und 9).

Bei Überschreiten der bevorzugten oberen Grenze des angegebenen Bereichs des Einlaufradius R_{S} weist der Einlaufbereich 52 eine zu geringe Krümmung auf. Entsprechend hat der Einlaufbereich 52 einen annähernd geradlinigen Verlauf, sodass der Effekt des fließenden Aufweitens verlorengeht.

Wird der Einlaufradius R_{S} gemäß der unteren Grenze mit weniger als 0,3 mm zu klein gewählt, verhindert ein scharfkantiger Einlaufbereich ein fließendes Aufweiten und Einlaufen (siehe oben). Daher ist es weiter erfindungsgemäß bevorzugt, den Einlaufradius Rs in einem Bereich von 1 mm≤R_{S}≤4 mm vorzusehen.

Der konvexe Einlaufbereich 52 geht tangential in den geradlinig verlaufenden Fortsetzungsbereich 54 über. Der Fortsetzungsbereich 54 ist ähnlich einer Mantelfläche eines Kegelstumpfs ausgebildet, die sich bevorzugt stetig an den Einlaufbereich 52 anschließt.

Der geradlinig verlaufende Fortsetzungsbereich 54 ist vorzugsweise in einem spitzen Winkel α (siehe Figur 1) in Bezug auf die zylindrische Mantelfläche 32 des Nietschafts 30 angeordnet. Gemäß unterschiedlicher bevorzugter Ausführungsformen vorliegender Erfindung ist der Fortsetzungsbereich 54 in einem Winkel α im Bereich von 5°≤α ≤30°, vorzugsweise 5°≤α≤20°.

Der spitze Winkel α des Fortsetzungsbereichs 54 hat Einfluss auf die Steifigkeit des Nietfußes 40 und die damit verbundene Hinterschnittbildung in einer Fügeverbindung. So verhindert ein Winkel α>30° ein ausreichendes Aufspreizen des Nietfußes 40. Zudem würde der Schafthohlraum 50 durch diesen großen Winkel für eine Stanzbutzenaufnahme zu stark verkleinert werden.

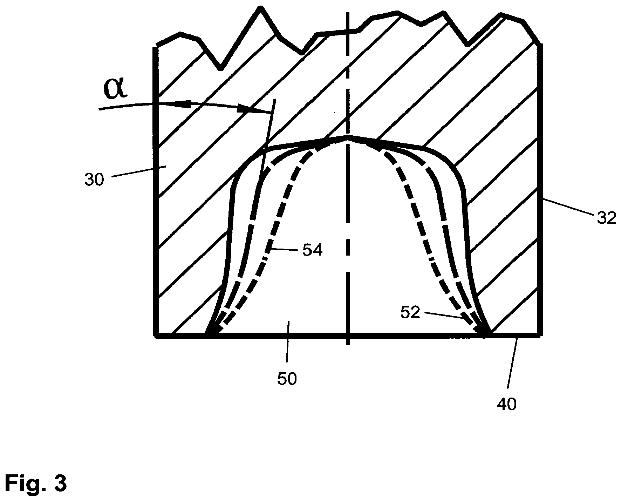

Die Einflüsse einer Änderung des Winkels α zeigt schematisch Figur 3.

Gemäß einer weiteren bevorzugten Ausführungsform vorliegender Erfindung weist der Schafthohlraum 50 eine Tiefe t_{B} auf. Die Tiefe t_{B} ist definiert als der Abstand zwischen der Nietfußstirnfläche 42 und einem Punkt eines Gewölbeabschnitts 56, der dem Nietkopf 10 am nächsten liegt.

Vorzugsweise liegt die Tiefe t_{B} in einem Bereich von 1/3 Dₐ ≤t_{B}≤ 2/3 Dₐ. Die Tiefe t_{B} bestimmt die Größe des Aufnahmevolumens für einen Stanzbutzen im Schafthohlraum 50. Daher wird gemäß einer bevorzugten Ausführungsform die Tiefe t_{B} größtmöglich gewählt. In diesem Zusammenhang ist zu beachten, dass mit zunehmender Tiefe t_{B} des Schafthohlraums 50 auch die Steifigkeit des Halbhohlstanzniets 1 im Fußbereich 40 abnimmt.

Der oben angegebene bevorzugte Bereich ist derart gewählt, dass zumindest Blechstärken von bis zu 1,2 mm als Stanzbutzen im Schafthohlraum 50 aufgenommen werden können.

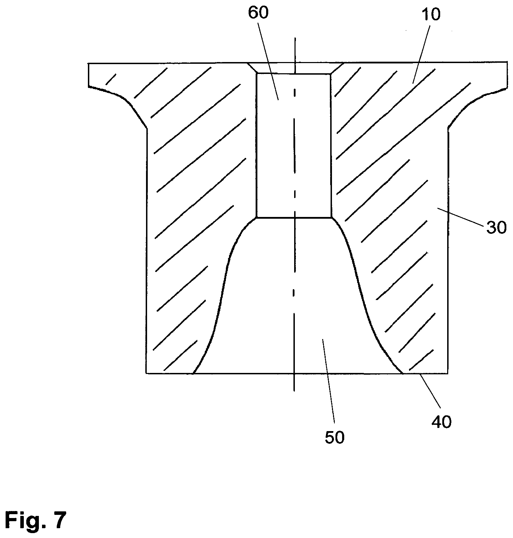

In Figur 7 ist die bevorzugte Ausführungsform des Halbhohlstanzniets 1 mit einer Durchgangsöffnung 60 gezeigt. Die Durchgangsöffnung 60 verbindet den Schafthohlraum 50 mit der Oberseite des Nietkopfs 10. Somit liegt bevorzugt ein Hohlniet vor, in dem die Durchgangsöffnung 60 die Aufnahme und ein Aufsteigen des Materials eines Stanzbutzens zusätzlich ermöglicht.

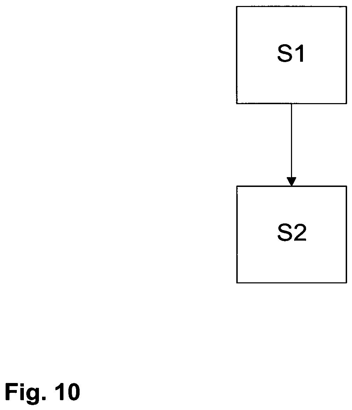

Figur 10 zeigt ein Flussdiagramm eines Verbindungsverfahrens von mindestens zwei Bauteilen mithilfe des oben beschriebenen Halbhohlstanzniets 1. In einem ersten Schritt S1 werden die mindestens zwei Bauteile B1, B2 übereinander in einer stapelförmigen Anordnung auf einer Matrize oder einem Amboss angeordnet. In einem darauf folgenden zweiten Schritt erfolgt ein Setzen des Halbhohlstanzniets 1 in den Bauteilstapel, um die Bauteile B1, B2 miteinander zu verbinden.

Entsprechend liegt eine Stanznietverbindung von mindestens zwei Bauteilen B1, B2, B3 vor, die in einer stapelförmigen Anordnung über den oben beschriebenen Halbhohlstanzniet 1 miteinander verbunden sind. Jeweils eine beispielhafte Darstellung einer hergestellten Stanznietverbindung zeigen die Figuren 8 und 9. In Figur 8 verbindet der Halbhohlstanzniet 1 die beiden Bauteile B1 und B2. In Figur 9 sind drei Bauteile B1, B2, B3 eines Bauteilstapels über den Halbhohlstanzniet 1 miteinander verbunden. Während in beiden Stanznietverbindungen ein Teil des ausgestanzten Materials im Schafthohlraum 50 zumindest teilweise aufgenommen wird, hat sich gegenüber vom Nietkopf 10 bevorzugt ein Schließkopf gebildet.

### 6. Bezugszeichenliste

- 1: Halbhohlstanzniet
- 10: Nietkopf
- 30: Nietschaft
- 32: zylindrische Mantelfläche
- 40: Nietfuß
- 42: Nietfußstirnfläche
- 50: Schafthohlraum
- 52: konvexer Einlaufbereich
- 54: Fortsetzungsbereich
- 56: Gewölbeabschnitt
- L: Gesamtlänge
- L_{A}: Längsachse
- B1, B2, B3: Bauteile

## Patentansprüche

1. Ein Halbhohlstanzniet (1), mit dem eine Verbindung zwischen mindestens zwei stapelförmig übereinander angeordneten Bauteilen herstellbar ist, der die folgenden Merkmale aufweist:
a. einen Nietkopf (10) mit einem sich davon erstreckenden Nietschaft (30), der eine zylindrische Mantelfläche (32) aufweist,
b. an einem dem Nietkopf (10) abgewandten Ende des Nietschafts (30) ist ein stumpfer Nietfuß (40) mit einer Nietfußstirnfläche (42) vorgesehen, die senkrecht zu einer Längsachse L_{A} des Nietschafts (30) angeordnet ist, und
c. ein im axialen Querschnitt des Nietschafts (30) glockenartig geformter Schafthohlraum (50) erstreckt sich beginnend am kopfabgewandten Ende in den Nietschaft (30) hinein, wobei der glockenartig geformte Schafthohlraum (50) gebildet wird aus:
i. einem konvexen Einlaufbereich (52), der an einer radialen Innenseite der Nietfußstirnfläche (42) beginnt und kreisbogenförmig mit einem Einlaufradius Rₛ in Richtung Nietkopf (10) verläuft,
ii. einem geradlinig verlaufenden Fortsetzungsbereich (54), in den der Einlaufbereich (52) tangential übergeht und der in einem spitzen Winkel α in Bezug auf die zylindrische Mantelfläche (32) angeordnet ist, und
iii. einem abschließenden Gewölbebereich (56).

2. Der Halbhohlstanzniet (1) gemäß Patentanspruch 1, der einen Schaftdurchmesser Dₐ von Dₐ ≤ 5,6 mm, vorzugsweise Dₐ = 5,5 mm, aufweist.

3. Der Halbhohlstanzniet (1) gemäß Patentanspruch 2, dessen Nietfußstirnfläche (42) eine radial verlaufende Fußbreite Bs im Bereich von 1/30 Dₐ ≤B_{S}≤1/3 Dₐ, vorzugsweise 1/15 Dₐ ≤B_{S}≤1/6 Dₐ, aufweist.

4. Der Halbhohlstanzniet (1) gemäß Patentanspruch 3, dessen Einlaufradius Rs in Bezug auf die Fußbreite B_{S} folgende Größe aufweist: R_{S} ≤ 20 B_{S}, vorzugsweise 0,3 mm ≤ R_{S} ≤ 6 mm und insbesondere 1 mm ≤ R_{S} ≤ 4 mm

5. Der Halbhohlstanzniet (1) gemäß einem der vorhergehenden Patentansprüche, in dem der Fortsetzungsbereich (54) in dem spitzen Winkel α im Bereich von 5° ≤ α ≤ 30°, vorzugsweise 5° ≤ α ≤ 20°, in Bezug auf die zylindrische Mantelfläche (32) angeordnet ist.

6. Der Halbhohlstanzniet (1) gemäß einem der vorhergehenden Patentansprüche in Kombination mit Patentanspruch 2, der eine Tiefe t_{B} des glockenartig geformten Schafthohlraums (50) in Bezug auf den Schaftdurchmesser Dₐ im Bereich von 1/3 Dₐ ≤t_{B}≤ 2/3 Dₐ aufweist.

7. Der Halbhohlstanzniet (1) gemäß einem der vorhergehenden Patentansprüche 1 bis 5, dessen glockenartig geformter Schafthohlraum (50) eine in Längsrichtung des Nietschafts (30) verlaufende zentrale Durchgangsöffnung (60) zum Nietkopf (10) oder eine Sackbohrung aufweist, um einen Hohlniet zu bilden.

8. Eine Stanznietverbindung aus mindestens zwei stapelförmig übereinander angeordneten Bauteilen, die über den Halbhohlstanzniet (1) gemäß einem der vorhergehenden Patentansprüche miteinander verbunden sind.

9. Ein Verfahren zum Verbinden von mindestens zwei Bauteilen mithilfe eines Halbhohlstanzniets (1), welches die folgenden Schritte aufweist:
a. Anordnen der mindestens zwei Bauteile übereinander in einer stapelförmigen Anordnung auf einer Matrize oder einem Amboss (Schritt S1),
b. Setzen des Halbhohlstanzniets (1) gemäß einem der vorhergehenden Patentansprüche 1-7 in die mindestens zwei Bauteile (Schritt S2).

## Claims

1. A semi-hollow punch rivet (1) by means of which a joint between at least two components is establishable which are arranged pile-like above each other, which comprises the following features:
a. a rivet head (10) having a rivet shaft (30) extending therefrom, which comprises a cylindrical lateral surface (32),
b. a blunt rivet foot (40) having a rivet foot front surface (42) which is arranged perpendicular to a longitudinal axis L_{A} of the rivet shaft (30), wherein said blunt rivet foot (40) is provided at an end of the rivet shaft (30) facing away from the rivet head (10), and
c. a shaft cavity (50) which is shaped bell-like in the axial cross-section of the rivet shaft (30) extends into the rivet shaft (30) starting at the end facing away from the head, wherein the bell-like shaped shaft cavity (50) is formed by
i. a convex inlet portion (52) starting at a radial inner side of the rivet foot front surface (42) and extending circular arc-shaped with an inlet radius Rs into the direction of the rivet head (10),
ii. a linearly extending continuation portion (54) into which the inlet portion (52) transitions tangentially and which is arranged in an acute angle α with respect to the cylindrical lateral surface (32), and
iii. a final dome portion (56).

2. The semi-hollow punch rivet (1) according to claim 1, having a shaft diameter Dₐ of Dₐ ≤ 5.6 mm, preferably Dₐ = 5.5 mm.

3. The semi-hollow punch rivet (1) according to claim 2, wherein the rivet foot front surface (42) has a radially extending foot width Bs in the range of 1/30 Dₐ ≤ B_{S} ≤ 1/3 Dₐ, preferably 1/15 Dₐ ≤ B_{S} ≤ 1/6 Dₐ.

4. The semi-hollow punch rivet (1) according to claim 3, the inlet radius Rs of which comprises with respect to the foot width Bs the following size: R_{S} ≤ 20 B_{S}, preferably 0.3 mm ≤ R_{S} ≤ 6 mm and in particular 1 mm ≤ R_{S} ≤ 4 mm.

5. The semi-hollow punch rivet (1) according to one of the preceding claims, in which the continuation portion (54) is arranged in the acute angle α in the range of 5° ≤ α ≤ 30°, preferably 5° ≤ α ≤ 20°, with respect to the cylindrical lateral surface (32).

6. The semi-hollow punch rivet (1) according to one of the preceding claims in combination with claim 2, having a depth t_{B} of the bell-like shaped shaft cavity (50) with respect to the shaft diameter Dₐ in the range of 1/3 Dₐ ≤ t_{B} ≤ 2/3 Dₐ.

7. The semi-hollow punch rivet (1) according to one of the preceding claims 1 to 5, the bell-like shaped shaft cavity (50) of which comprises a central through opening (60) to the rivet head (10) extending into the longitudinal direction of the rivet shaft (30) or a blind hole to form a hollow rivet.

8. A punch rivet joint of at least two components arranged pile-shaped above each other, which are connected to each other by means of the semi-hollow punch rivet (1) according to one of the preceding claims.

9. A method for connecting at least two components by means of a semi-hollow punch rivet (1), comprising the following steps:
a. arranging the at least two components above each other in a pile-shaped arrangement on a die or an anvil (step S1) and
b. placing the semi-hollow punch rivet (1) according to one of the preceding claims 1-7 into the at least two components (step S2).

## Revendications

1. Un rivet auto-poinçonneur semi-tubulaire (1) permettant d'établir un raccordement entre au moins deux composants disposés l'un au-dessus de l'autre par empilement, qui présente les caractéristiques suivantes :
a) une tête de rivet (10) avec une tige de rivet (30) s'étendant à partir de celle-ci, qui présente une surface enveloppante cylindrique (32),
b) un pied de rivet tronqué (40) est prévu à une extrémité de la tige de rivet (30) opposée à la tête de rivet (10) avec une surface frontale (42), qui est disposée perpendiculairement à un axe longitudinal L_{A} de la tige de rivet (30), et
c) une cavité de tige (50) en forme de cloche dans la section transversale axiale de la tige de rivet (30) s'étend à partir de l'extrémité opposée à la tête dans la tige de rivet (30), sachant que la cavité de tige (50) en forme de cloche est constituée :
• d'une zone d'entrée convexe (52), qui commence sur un côté intérieur radial de la surface frontale de pied de rivet (42) et décrit un arc de cercle avec un rayon d'entrée Rs en direction de la tête de rivet (10),
• d'une zone de continuité linéaire (54), dans laquelle la zone d'entrée (52) se prolonge tangentiellement et est disposée à un angle aigu α par rapport à la surface enveloppante cylindrique (32), et
• d'une zone voûtée terminale (56).

2. Le rivet auto-poinçonneur semi-tubulaire (1) selon la revendication 1, qui présente un diamètre de tige Dₐ de Dₐ ≤ 5,6 mm, de préférence Dₐ = 5,5 mm.

3. Le rivet auto-poinçonneur semi-tubulaire (1) selon la revendication 2, dont la surface frontale de pied de rivet (42) présente une largeur de pied Bs s'étendant radialement dans la plage de 1/30 Dₐ ≤ Bₛ ≤1/3 Dₐ, de préférence 1/15 Dₐ ≤ Bₛ ≤ 1/6 Dₐ.

4. Le rivet auto-poinçonneur semi-tubulaire (1) selon la revendication 3, dont le rayon d'entrée Rs présente la grandeur suivante par rapport à la largeur de pied Bₛ : Rₛ ≤ 20 Bₛ, de préférence 0,3 mm ≤ Rₛ ≤ 6 mm et notamment 1 mm ≤ Rₛ ≤ 4 mm.

5. Le rivet auto-poinçonneur semi-tubulaire (1) selon l'une des revendications précédentes, dans lequel la zone de continuité (54) est disposée à un angle aigu α dans la plage de 5° ≤ α ≤ 30°, de préférence 5° ≤ α ≤ 20°, par rapport à la surface enveloppante cylindrique (32),

6. Le rivet auto-poinçonneur semi-tubulaire (1) selon l'une des revendications précédentes en combinaison avec la revendication 2, qui présente une profondeur t_{B} de la cavité de tige (50) en forme de cloche par rapport au diamètre de la tige Dₐ dans la plage de 1/3 Dₐ ≤ t_{B} ≤ 2/3 Dₐ.

7. Le rivet auto-poinçonneur semi-tubulaire (1) selon l'une des revendications précédentes 1 à 5, dont la cavité de tige (50) en forme de cloche présente une ouverture de passage centrale (60) s'étendant dans le sens longitudinal de la tige de rivet (30) vers la tête de rivet (10) ou un trou borgne pour former un rivet tubulaire.

8. Un raccordement riveté d'au moins deux composants disposés l'un au-dessus de l'autre par empilement, qui sont reliés l'un à l'autre par le rivet auto-poinçonneur semi-tubulaire (1) selon l'une des revendications précédentes.

9. Un procédé de raccordement d'au moins deux composants à l'aide d'un rivet auto-poinçonneur semi-tubulaire (1), lequel présente les étapes suivantes :
a) la disposition des deux composants au moins superposés par empilement sur une matrice ou une enclume (étape S1),
b) la pose du rivet auto-poinçonneur semi-tubulaire (1) ) selon l'une des revendications précédentes 1-7 dans les deux composants au moins (étape S2).
